# EUROPEAN PATENT APPLICATION

(11) **EP 2 490 115 A1**
(43) Date of publication of application: **22.08.2012**
(21) Application number: 12155825.8
(22) Date of filing: 16.02.2012
(51) Int. Cl.: G06F 3/048, H04M 1/67

(54) **Electronic device, controlling method thereof and computer program product**

(30) Priority: 17.02.2011 US 201161444087 P; 03.02.2012 US 201213365262
(71) Applicant: HTC Corporation, Taoyuan County 330 (TW)
(72) Inventor: Brinda, David, WA, CA California 98005 (US); Bamford, Drew, WA, CA California 98005 (US); Cielak, Matthew Joseph, WA, CA California 98005 (US)
(74) Representative: 2K Patentanwälte Blasberg Kewitz & Reichel

(57) **Abstract**

An electronic device, a controlling method thereof, and a computer program product are provided. In the present method, a part of inner area of an unlock ring is displayed while the electronic device is in a user-interface lock state. While a user input applied to the unlock ring on or near a touch screen of the electronic device is detected, the unlock ring is moved in accordance with the user input. The electronic device is switched to a user-interface unlock state if the unlock ring is moved to make a predetermined ratio of the inner area of the unlock ring cross a predetermined edge, or maintained in the use-interface lock state if the unlock ring is not moved to make the predetermined ratio of the inner area of the unlock ring cross the predetermined edge.

## Description

### BACKGROUND OF THE INVENTION

### Field of the Invention

The present invention relates to an electronic device with a touch screen. More particularly, the present invention relates to a method to unlock the touch screen, the electronic device using the same and a computer program produce.

### Description of Related Art

Along with the development of touch sensitive input devices such as touch screens, manufacturers of electronic devices such as notebook computers, mobile phones or mobile multimedia players, etc. generally use a touch screen to replace a conventional keyboard to provide a user interface through which a user may interact with the devices more conveniently. Taking the mobile phone having a touch screen as an example, the user may use his/her fingers or an auxiliary device such as a stylus to directly input characters on the touch screen or open application programs. Therefore, the touch screen provides the user a flexible and intuitive input interface.

Though it is convenient to operate the mobile electronic device through the touch screen, manufacturers of the mobile electronic device have to develop a screen lock mechanism for preventing unintentional or unauthorized use of the device, so as to prevent activation of a function caused by inadvertent touch of the touch screen, which may cause trouble in using the device. On the other hand, it is also necessary to develop procedures to facilitate users to unlock the locked mobile electronic device.

### SUMMARY OF THE INVENTION

Accordingly, the present invention is directed to an electronic device, a controlling method thereof and a computer program product, by which a simple, clear and unconfused way to unlock a touch screen of the electronic device more is provided.

The present invention is directed to a method of controlling an electronic device with a touch screen. The method includes displaying part of inner area of an unlock ring while the electronic device is in a user-interface lock state, detecting a user input applied to the unlock ring on or near the touch screen, and moving the unlock ring in accordance with the user input. The method further includes transitioning the electronic device to a user-interface unlock state if the unlock ring is moved to make a predetermined ratio of the inner area of the unlock ring cross a predetermined edge, and maintaining the electronic device in the use-interface lock state if the unlock ring is not moved to make the predetermined ratio of the inner area of the unlock ring cross the predetermined edge.

The present invention is directed to an electronic device having a touch screen, memory, one or more processors, and one or more programs. In which, the one or more programs are stored in the memory and configured to be executed by the one or more processors. The one or more programs including instructions to display part of inner area of an unlock ring while the electronic device is in a user-interface lock state, to detect a user input applied to the unlock ring on or near the touch screen, to move the unlock ring in accordance with the user input, to transition the electronic device to a user-interface unlock state if the unlock ring is moved to make a predetermined ratio of the inner area of the unlock ring cross a predetermined edge, and to maintain the electronic device in the use-interface lock state if the unlock ring is not moved to make the predetermined ratio of the inner area of the unlock ring cross the predetermined edge.

The present invention is directed to a computer program product for use in conjunction with an electronic device comprising a touch screen, the computer program product comprising a computer readable storage medium and an executable computer program mechanism embedded therein, the executable computer program mechanism comprising instructions for displaying part of inner area of an unlock ring while the electronic device is in a user-interface lock state, detecting a user input applied to the unlock ring on or near the touch screen, moving the unlock ring in accordance with the user input, transitioning the electronic device to a user-interface unlock state if the unlock ring is moved to make a predetermined ratio of the inner area of the unlock ring cross a predetermined edge, and maintaining the electronic device in the use-interface lock state if the unlock ring is not moved to make the predetermined ratio of the inner area of the unlock ring cross the predetermined edge.

In the present invention, an unlock ring displaying on the touch screen while the electronic device is in the user-interface lock state is provided for users to unlock the electronic device more conveniently. Besides, various text and/or animation hints may be prompted to facilitate users performing the proper unlock action more precisely.

In order to make the aforementioned and other objects, features and advantages of the present invention comprehensible, preferred embodiments accompanied with figures are described in detail below.

It is to be understood that both the foregoing general description and the following detailed description are exemplary, and are intended to provide further explanation of the invention as claimed.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a block diagram of an electronic device according to an embodiment of the present invention.

FIG. 2 is a flow chart of a method of controlling an electronic device according to an embodiment of the present invention.

FIG. 3 is a flow chart of a method of controlling an electronic device according to another embodiment of the present invention.

FIGs. 4A-4D are schematic views illustrating the visual output while controlling an electronic device according to an embodiment of the invention.

FIGs. 5A-5D are schematic views illustrating the visual output while controlling an electronic device according to another embodiment of the invention.

FIGs. 6A-6C are schematic views illustrating the visual output while controlling an electronic device according to still another embodiment of the invention.

### DESCRIPTION OF EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

In order to make the content of the present invention more clear, embodiments are described as follows to serve as the examples of which the present invention may be implemented accordingly.

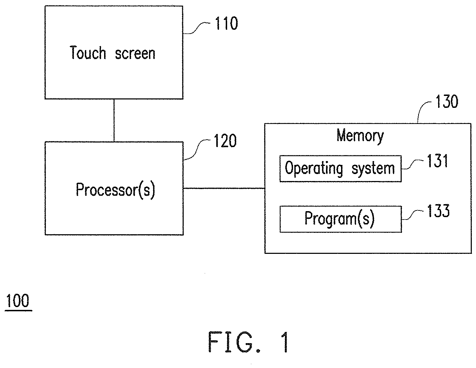

FIG. 1 is a block diagram of an electronic device according to an embodiment of the present invention. Referring to FIG. 1, the electronic device 100 includes a touch screen 110, one or more processors 120, and a memory 130. The electronic device 100 is, for example, a mobile phone, a smart phone, a personal digital assistant (PDA), a laptop, a tablet personal computer (PC), or a digital camera, the present invention is not limited thereto.

The touch screen 110 may be a resistive touch screen, a capacitive touch screen, an optical touch screen, or a magnetic touch screen, which is not limited by the present invention. The touch screen 110 is used as an input and output interface for the electronic device 100. That is, the touch screen 110 is configured to display different visual output when using the electronic device 100, and to receive different touch operations from a user. In which, the visual output may be the operating result and/or the operation image such as the home screen image, the lock screen image, or the graphical user interface of applications. While the electronic device 100 is in operation, movement of one or more objects on or near the touch screen 110 can be detected, and the corresponding signals are transmitted to the one or more processor 120 to perform the related action on the electronic device 100, then the generated visual output is displayed on the touch screen 110.

The one or more processors 120 may be a central processing unit (CPU), which is configured to run various software programs and/or instruction sets stored in the memory 130 to perform different functions for the electronic device 100 and to process data after the electronic device 100 is powered on.

The memory 130 may be an internal storage unit such as a random access memory or a non-volatile memory (e.g., a flash memory, or a magnetic disk storage device). The memory 130 may also be an external storage unit such as Secure Digital (SD) card, a SIM card, or other storage media which can be externally connected to the electronic device 100. The memory 130 may further be a networked online storage that can be accessed through a communication network by a network component (not shown) of the electronic device 100.

In the present embodiment, at least an operating system 131, and one or more programs 133 are stored in the memory 130.

The operating system 131 includes various software components and/or drivers and is used for managing a general operation of the electronic device 100. For example, the operating system 131 provides a user interface for users to interact with the electronic device 100, manages applications that are running on the electronic device 100, and manages files stored in the electronic device 100.

The one or more programs 133 comprise instructions to be executed by the one or more processors 120. To be specific, the one or more processors 120 run the one or more programs 133 to perform a method of controlling the electronic device 100 of the present embodiment. The controlling method of the present embodiment is described later with reference of figures.

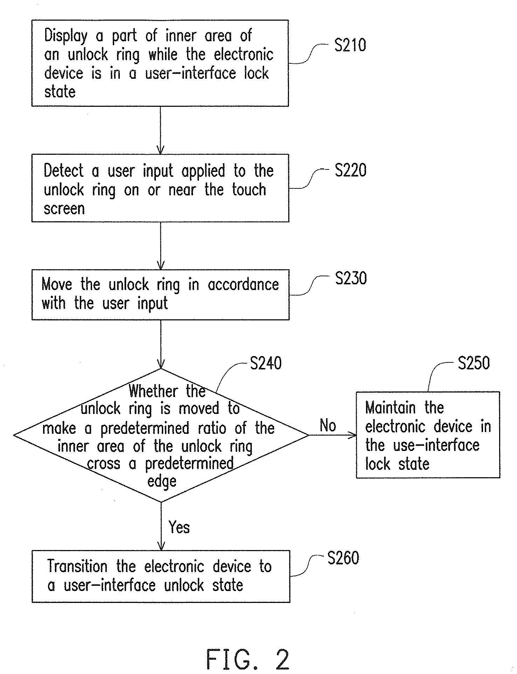

Below, the operation of the electronic device 100 will be described in detail with reference to another embodiment of the invention. FIG. 2 is a flow chart of a method of controlling an electronic device according to an embodiment of the present invention. Please refer to Fig. 1 and Fig. 2.

In the present embodiment, the electronic device 100 is set to a user-interface lock state. To be specific, the electronic device 100 may have a plurality of operation states including the user-interface lock state and a user-interface unlock state. In the user-interface lock state, the electronic device 100 is in operation but ignores most user input. That is, the electronic device 100 in the user-interface lock state may only respond to a predefined set of user inputs such as input that corresponds to an attempt to switch the electronic device 100 to the user-interface unlock state.

On the other hand, while the electronic device 100 is in the user-interface unlock state, the electronic device 100 can be operated by the user normally. That is, general functions supported by the electronic device 100 can be invoked, and all kinds of user input from the touch screen 110 or the other input device (e.g., a hardware button, a key, or a scroll wheel) can be responded by the electronic device 100.

In step S210, a part of inner area of an unlock ring is displayed on the touch screen 110 while the electronic device 100 is in the user-interface lock state. To be specific, the unlock ring is formed by two geometric patterns in which one geometric pattern is wholly contained by the other one, the area of the smaller geometric pattern is the inner area of the unlock ring, and a part of the inner area is invisible on the touch screen 110. In the present embodiment, the unlock ring has a circular shape (i.e., a circular unlock ring). However, in another embodiment, the unlock ring may have a square shape, a rectangle shape, a rhombus shape, an elliptic shape, a star-shape, a heart shape, or a polygon shape. Moreover, since the unlock ring is formed by two geometric patterns, the type of two geometric patterns may be identical or different. That is to say, the look of the unlock ring is not limited in the present invention.

Next, in step S220, a user input applied to the unlock ring on or near the touch screen 110 is detected. The user input is, for example, an object contact on or near the touch screen 110 close to the display position of the unlock ring.

As long as the user input can be detected continuously, in step S230, the unlock ring is moved in accordance with the user input. That is, the display position of the unlock ring is changed in accordance with the movement of the user input, and the visual feedback is provided to the user through the touch screen 110.

Once the user input is terminated, in step S240, it is determined that whether the unlock ring is moved to make a predetermined ratio of the inner area of the unlock ring cross a predetermined edge. In the present embodiment, the predetermined edge is an edge of the display area of the touch screen 110. That is, the predetermined edge may be a physical edge of the touch screen 110. In another embodiment, the predetermined edge may be an edge of an application window, an edge of a dialog box, or any virtual edge displayed on the touch screen 110.

If the unlock ring is not moved to make the predetermined ratio of the inner area of the unlock ring cross the predetermined edge, in step S250, the electronic device 100 maintains in the use-interface lock state. For example, it is assumed that the predetermined ratio is 100%. The unlock ring is moved in accordance with the detected user input, and if not all of the inner area of the unlock ring clear the predetermined edge at the time of the termination of the user input, the electronic device 100 remains in the use-interface lock state.

However, if the unlock ring is moved to make the predetermined ratio of the inner area of the unlock ring cross the predetermined edge, in step S260, the electronic device 100 transitions to a user-interface unlock state. Assuming that the predetermined ratio is 100%, the unlock ring is moved in accordance with the detected user input, and the electronic device 100 remains in the use-interface lock state until the user input is terminated while all of the inner area of the unlock ring clear the predetermined edge. Furthermore, in the present embodiment, the unlock ring is zoomed in on the touch screen 110 during the transition period. However, in another embodiment, the unlock ring is zoomed out on the touch screen 110 during the transition period. By applying a zoom-in animation effect or a zoom-out animation effect to the unlock ring, the user can clearly notice that the unlock action is done successfully.

Although 100% is taken as an example of the predetermined ratio in the foregoing embodiment, the present invention is not limited thereto. In another embodiment, the predetermined ratio may be 95%, 90%, or other value. If the predetermined ratio is 90%, as long as one-tenth of the inner area of the unlock ring cross the predetermined edge while the user input is terminated, the electronic device 100 transitions to a user-interface unlock state. It should be noted that while the unlock ring is released (i.e., the user input is terminated), whether the predetermined ratio of the inner area of the unlock ring is completely displayed on the touch screen 110 is not a necessary condition to transition the electronic device 100 to the user-interface unlock state.

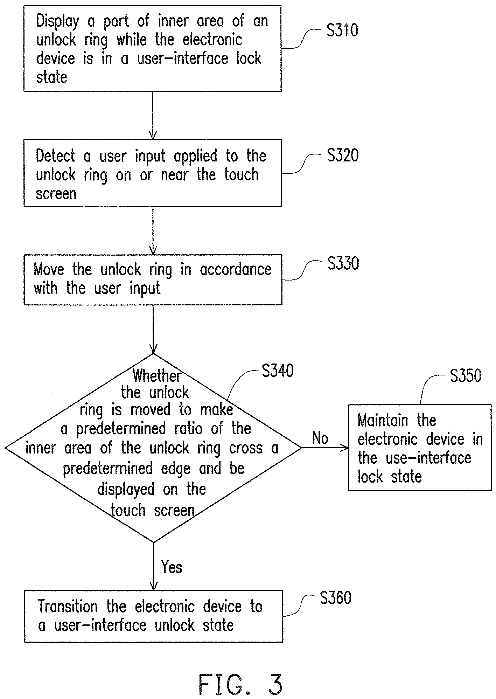

Fig. 3 is a flow chart of a method of controlling an electronic device according to another embodiment of the present invention. The steps in Fig. 3 are similar to those in Fig. 2, and the difference between the two embodiments is that the step 240 in Fig. 2 is replaced by the step 340 in Fig. 3. The similar steps in the two embodiments will not be described in detail herein.

While the unlock ring is moved in accordance with the existent user input, if the user input is terminated, in step S340, whether the unlock ring is moved to make a predetermined ratio of the inner area of the unlock ring cross the predetermined edge and be displayed on the touch screen 110 is determined. For example, it is assumed that the predetermined ratio is 100%. Then, the electronic device 100 will transition to the user-interface unlock state only if the entire inner area of the unlock ring crosses the predetermined edge and is displayed on the touch screen 110.

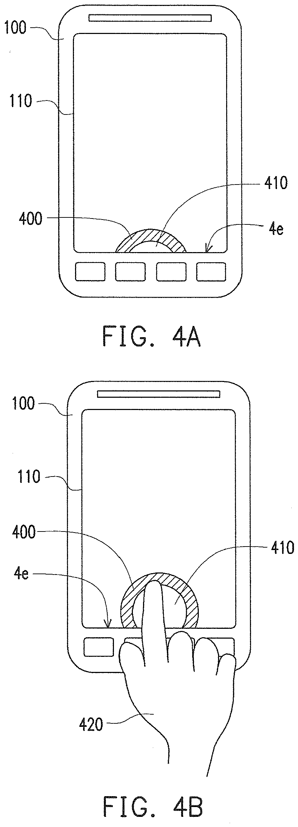

Figs. 4A-4D are schematic views illustrating the visual output while controlling an electronic device according to an embodiment of the invention. In this embodiment, the predetermined ratio is, for example, 100%.

In Fig. 4A, while the electronic device 100 enters a user-interface lock state, a part of inner area 410 of an unlock ring 400 is displayed on the touch screen 110. In the present embodiment, the unlock ring 400 displayed on the touch screen 110 is divided by the down edge 4e of the touch screen 100, however, the initial position of the unlock ring 400 is not limited thereto.

It is assumed that the predetermined edge is the down edge 4e. In Fig. 4B, the user begins the unlock action by touching the unlock ring 400 with his/her hand and finger 420, and then the unlock ring 400 will be moved in accordance with the movement of the finger 420. If the user release the unlock ring 400 as the situation shown in Fig. 4B, the electronic device 100 remains in the user-interface lock state since a part of the inner area 410 is still below the down edge 4e, meanwhile, a unlock hint is displayed on the touch screen 110. The unlock hint is, for example, a text hint which describes how to unlock the touch screen 110. The unlock hint may fade out if no user input has been detected for a certain amount of time (e.g., 5 seconds).

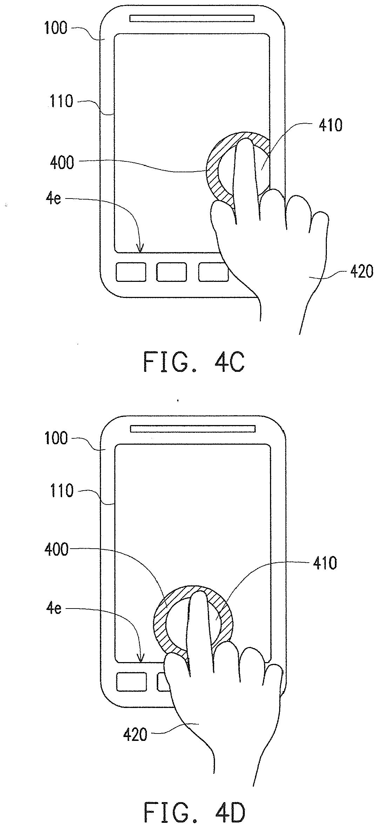

However, in one embodiment, if the user release the unlock ring 400 as the situation shown in Fig. 4C, the electronic device 100 will transition to the user-interface unlock state since all of the inner area 410 of the unlock ring 400 clears the down edge 4e. The electronic device 100 will transition to the user-interface unlock state as long as the entire inner area 410 crosses the down edge 4e, even if there is a portion of inner area 410 does not be displayed on the touch screen 110.

In another embodiment, if the user release the unlock ring 400 as the situation shown in Fig. 4D, the electronic device 100 will transition to the user-interface unlock state since all of the inner area 410 of the unlock ring 400 crosses the down edge 4e and is displayed on the touch screen 110.

It should be noted that the user does not have to move his/her finger 420 vertically to unlock the electronic device 100.

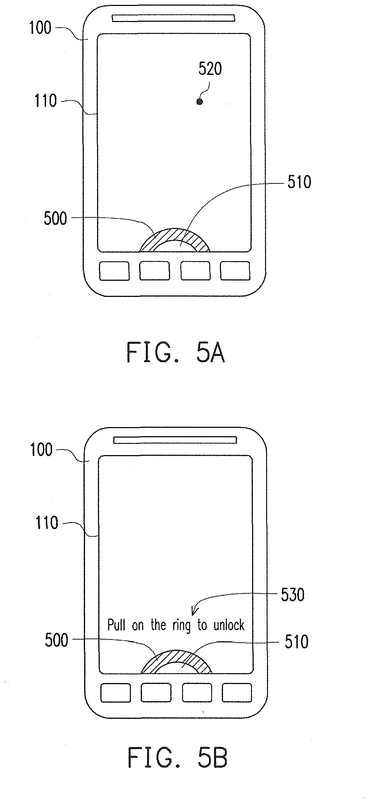

Figs. 5A-5D are schematic views illustrating the visual output while controlling an electronic device according to another embodiment of the invention. In Fig. 5A, the electronic device 100 is in the user-interface lock state, and a part of inner area 510 of an unlock ring 500 is displayed on the touch screen 110. The position of the unlock ring 500 shown in Fig. 5A is called the initial display position. When the user taps on the position 520 or anywhere on the touch screen 110, besides the unlock ring 500, the electronic device 100 maintains in the user-interface lock state. Furthermore, a unlock hint will be displayed on the touch screen 110 in response to the user input that is not applied to the unlock ring 500.

In one embodiment, the unlock hint is a text hint 530 as shown in Fig. 5B. The instructional text hint 530 illustrates how to unlock the touch screen 110 to the user. The text hint 530 may be displayed near the unlock ring 500 or at the top of the touch screen 110. The position of displaying the text hint 530 is not limited in the present invention.

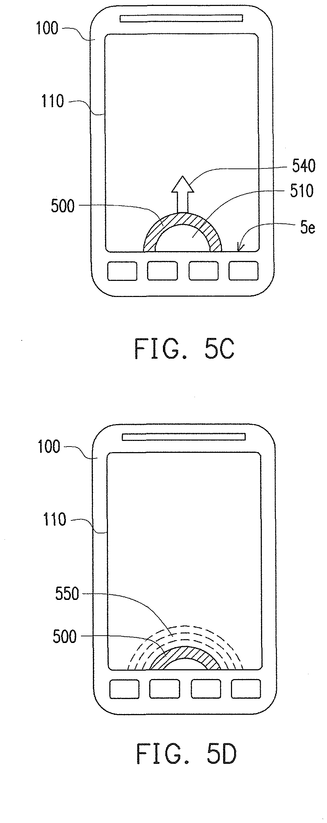

In another embodiment, the unlock hint is an animation hint that moves the unlock ring 500 in a direction that can make the predetermined ratio of inner area of the unlock ring 500 cross the predetermined edge 5e. Since the predetermined edge 5e is the down edge of the touch screen 110, as shown in Fig. 5C, the animation hint is performed in which the unlock ring 500 moves in an upward direction 540. It should be noted that the displacement of moving the unlock ring 500 during the animation is not limited in the present embodiment. The unlock ring 500 may not actually moved to make the entire inner area 510 cross the predetermined edge 5e. In the present embodiment, the unlock ring 500 moves to a predetermined position and then falls back to the initial display position. In another embodiment, the unlock ring 500 bounces when it falls back to the initial display position. In yet another embodiment, as shown in Fig. 5D, a ripple animation 550 is displayed around the unlock ring 550 when it falls back to the initial display position.

The text and animation hint facilitates user to perform a correct unlock action even if the user is using the electronic device 100 for the first time.

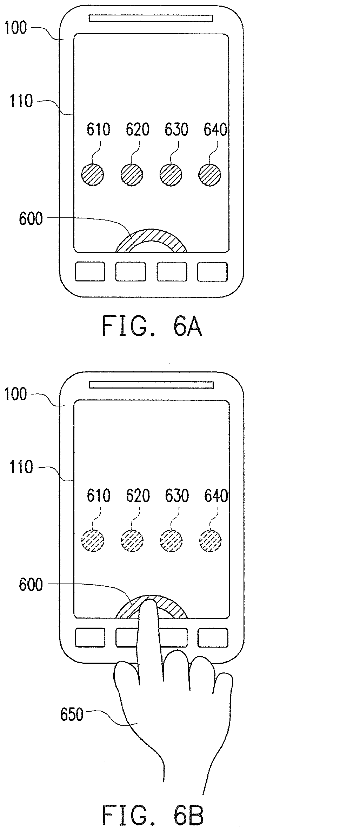

Figs. 6A-6C are schematic views illustrating the visual output while controlling an electronic device according to another embodiment of the invention. In Fig. 6A, besides a part of inner area of the unlock ring 600, four shortcut icons 610-640 are displayed outside the unlock ring 600 while the electronic device 100 is in the user-interface lock state. It should be noted that the number of the displayed shortcut icon is not limited in the present invention.

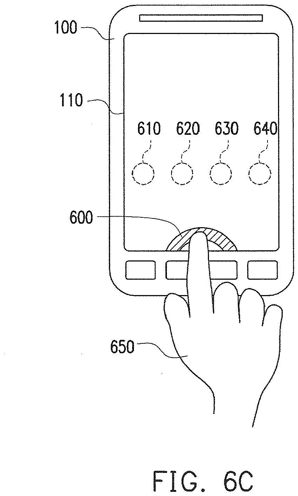

While detecting the user input applied to the unlock ring 600 such as the user touches the unlock ring 600 with his/her finger 650 as shown in Figs. 6B and 6C, the shortcut icons 610-640 are fading out gradually. This helps avoid improper user interaction with the shortcut icons 610-640 and the unlock ring 600. However, if the electronic device 100 does not transition to the user-interface unlock state within a predetermined time, the shortcut icons 610-640 fade in again.

An embodiment of the invention provides a computer program product, in which the computer program product comprises a computer readable storage medium and an executable computer program mechanism embedded therein. After the computer program mechanism is executed by an electronic device having a touch screen, the electronic device can achieve the effects illustrated in the afore-described embodiments. The computer readable storage medium may be a read only memory, a random access memory, a magnetic tape, a floppy disk, a hard disk, an optical disk, or a transmission medium, etc. Alternatively, the computer program product may be directly provided through a network transmission, which is not to be limited by invention herein.

In view of the above, the present invention provides an electronic device, a controlling method thereof, and a computer program product. The user may interact with the unlock ring displayed on the touch screen to unlock the electronic device intuitively. Furthermore, the text or animation hint will be provided to facilitate user to perform the correct unlock action, thereby improving the convenience of unlocking the electronic device.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A method of controlling an electronic device with a touch screen, comprising:
displaying (S210) part of inner area of an unlock ring while the electronic device is in a user-interface lock state;
detecting (S220) a user input applied to the unlock ring on or near the touch screen;
moving (S230) the unlock ring in accordance with the user input;
transitioning (S260) the electronic device to a user-interface unlock state if (S240) the unlock ring is moved to make a predetermined ratio of the inner area of the unlock ring cross a predetermined edge; and
maintaining (S250) the electronic device in the use-interface lock state if (S240) the unlock ring is not moved to make the predetermined ratio of the inner area of the unlock ring cross the predetermined edge.

2. The method of claim 1, wherein the step of transitioning the electronic device to the user-interface unlock state comprises:
transitioning the electronic device to the user-interface unlock state if the unlock ring is moved to make the predetermined ratio of the inner area of the unlock ring cross the predetermined edge and be displayed on the touch screen,
wherein the predetermined edge is an edge of display area of the touch screen.

3. The method of claim 1 or 2, wherein the step of transitioning the electronic device to the user-interface unlock state comprises:
zooming in or out the unlock ring on the touch screen.

4. The method of any of the claims 1 to3, further comprising:
displaying a unlock hint on the touch screen if the unlock ring is not moved to across the predetermined edge on the touch screen to display the predetermined ratio of the inner area of the unlock ring on the touch screen.

5. The method of any of the claims 1 to 4, further comprising:
maintaining the electronic device in the use-interface lock state in response to detecting another user input not applied to the unlock ring on or near the touch screen.

6. The method of claim 5, further comprising:
displaying a unlock hint on the touch screen in response to detecting the another user input not applied to the unlock ring on or near the touch screen.

7. The method of claim 6, wherein the unlock hint is an animation hint.

8. The method of claim 7, wherein the animation hint includes moving the unlock ring in a direction of making the predetermined ratio of inner area of the unlock ring cross the predetermined edge.

9. The method of any of the claims 1 to 8, wherein at least one shortcut icon is displayed outside the unlock ring while the electronic device is in the user-interface lock state, the method further comprising:
fading out the at least one shortcut icon in response to detecting the user input applied to the unlock ring on or near the touch screen.

10. The method of claim 9, further comprising:
fading in the at least one shortcut icon when the electronic device is not transitioned to the user-interface unlock state within a predetermined time.

11. The method of any of the claims 1 to 10, wherein the predetermined ratio includes 100%.

12. An electronic device (100), comprising:
a touch screen ( 110);
memory;
one or more processors; and
one or more programs, wherein the one or more programs are stored in the memory and configured to be executed by the one or more processors, the one or more programs including instructions:
to display part of inner area (410) of an unlock ring (400) while the electronic device is in a user-interface lock state;
to detect a user input (420) applied to the unlock ring on or near the touch screen;
to move the unlock ring in accordance with the user input;
to transition the electronic device to a user-interface unlock state if the unlock ring is moved to make a predetermined ratio of the inner area of the unlock ring cross a predetermined edge; and
to maintain the electronic device in the use-interface lock state if the unlock ring is not moved to make the predetermined ratio of the inner area of the unlock ring cross the predetermined edge.

13. The electronic device of claim 12, wherein the instructions transition the electronic device to the user-interface unlock state if the unlock ring is moved to make the predetermined ratio of the inner area of the unlock ring cross the predetermined edge and be displayed on the touch screen,
wherein the predetermined edge is an edge of display area of the touch screen.

14. The electronic device of claim 12 or 13, wherein the instructions zoom in or out the unlock ring on the touch screen.

15. The electronic device of any of the claims 12 to 14, wherein the instructions further display a unlock hint on the touch screen if the unlock ring is not moved to across the predetermined edge on the touch screen to display the predetermined ratio of the inner area of the unlock ring on the touch screen.

16. The electronic device of any of the claims 12 to 15, wherein the instructions further maintain the electronic device in the use-interface lock state in response to detecting another user input not applied to the unlock ring on or near the touch screen.

17. The electronic device of claim 16, wherein the instructions further display a unlock hint on the touch screen in response to detecting the another user input not applied to the unlock ring on or near the touch screen

18. The electronic device of claim 17, wherein the unlock hint is an animation hint.

19. The electronic device of claim 18, wherein the animation hint includes moving the unlock ring in a direction of making the predetermined ratio of inner area of the unlock ring cross the predetermined edge.

20. The electronic device of any of the claims 12 to 19, wherein at least one shortcut icon is displayed outside the unlock ring while the electronic device is in the user-interface lock state, and the instructions fade out the at least one shortcut icon in response to detecting the user input applied to the unlock ring on or near the touch screen.

21. The electronic device of claim 20, wherein the instructions fade in the at least one shortcut icon when the electronic device is not transitioned to the user-interface unlock state within a predetermined time.

22. The electronic device of claim any of the claims 12 to 21, wherein the predetermined ratio includes 100%.
